(19) Europäisches Patentamt / European Patent Office / Office européen des brevets

(11) **EP 4 768 243 A1**

## (12) EUROPEAN PATENT APPLICATION
published in accordance with Art. 153(4) EPC

(43) Date of publication:
**01.07.2026 Bulletin 2026/27**

(21) Application number: **24897533.6**

(22) Date of filing: **26.11.2024**

(51) International Patent Classification (IPC):
**B32B 27/32** (2006.01)    **B32B 9/00** (2006.01)
**B65D 65/40** (2006.01)

(52) Cooperative Patent Classification (CPC):
**B32B 9/00; B32B 27/32; B65D 65/40**

(86) International application number:
**PCT/JP2024/041796**

(87) International publication number:
**WO 2025/115849 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.11.2023 JP 2023200812**

(71) Applicant: **TOPPAN Holdings Inc.
Tokyo 110-0016 (JP)**

(72) Inventor: **ISHII, Rika
Tokyo 110-0016 (JP)**

(74) Representative: **Hasegawa, Kan
Patentanwaltskanzlei Hasegawa
Untere Hauptstraße 56
85354 Freising (DE)**

## (54) LAMINATE FOR PACKAGING, AND PACKAGING BAG

(57)    A laminate for packaging, the laminate including a base material layer, a gas barrier layer including an inorganic oxide layer, and a sealant layer in this order, in which the base material layer is a biaxially stretched polypropylene-based resin film, the sealant layer is a polypropylene-based resin film, a polypropylene-based resin is contained in an amount of 90 mass% or more based on a total amount of the laminate, and a heat shrinkage rate in an MD direction and a heat shrinkage rate in a TD direction of the laminate after being heated in an oven at 150°C for 15 minutes, as determined by the following Equations (1) and (2), are less than 5.0% and less than 10%, respectively:

Heat shrinkage rate (%) in MD direction = (Length in MD direction before heating - Length in MD direction after heating)/Length in MD direction before heating $\times$ 100...(1)    (1)

Heat shrinkage rate (%) in TD direction = (Length in TD direction before heating - Length in TD direction after heating)/Length in TD direction before heating $\times$ 100...(2)    (2)

*Fig.1*

## Description

### Technical Field

The present disclosure relates to a laminate for packaging and a packaging bag.

### Background Art

A laminate has been known which includes a biaxially stretched PET (polyethylene terephthalate) film having excellent heat resistance and toughness as a base film and a polyolefin film, such as polyethylene or polypropylene, as a sealant layer (see, for example, Patent Literature 1).

### Citation List

### Patent Literature

Patent Literature 1: Japanese Unexamined Patent Publication No. 2017-178357

### Summary of Invention

### Technical Problem

While the problem of plastic waste is receiving worldwide attention, demand for environmentally friendly packaging materials is increasing toward the realization of a society with an environmentally-sound material cycle. With regard to packaging materials, many global companies have set targets for enhanced plastic resource recycling and have proposed various measures. For example, in the United States, recycling routes from collection to reuse of PE (polyethylene) are beginning to be established, and efforts toward recycling based on mono-materials (single materials) are accelerating worldwide. That is, conventionally, even in laminates for packaging in which high performance has been achieved by combining various different materials, monomaterialization is being sought.

When a conventional multi-material (composite material) packaging material is to be made from a mono-material, as a retort packaging material, it is conceivable to change to a packaging material made of a single material of PP (polypropylene) from the viewpoint of sealant characteristics. However, such a PP-based mono-material packaging material has a problem in that the gas barrier properties are easily deteriorated after a retort treatment as compared with a multi-material packaging material.

The present disclosure has been made in view of the above circumstances, and an object thereof is to provide a laminate for packaging capable of suppressing deterioration of gas barrier properties after a retort treatment even when polypropylene is used as a main constituent.

Another object of the present disclosure is to provide a packaging bag using the laminate for packaging.

### Solution to Problem

In order to solve the above problems, the inventors have found that it is important to suppress heat shrinkage in the MD direction/TD direction after heating at a predetermined temperature in a laminate including polypropylene-based resin films as a base material layer and a sealant layer, and have completed the laminate of the present disclosure. That is, the present disclosure provides the following laminate for packaging and a packaging bag.

[1] A laminate for packaging, the laminate including a base material layer, a gas barrier layer including an inorganic oxide layer, and a sealant layer in this order, in which

the base material layer is a biaxially stretched polypropylene-based resin film,
the sealant layer is a polypropylene-based resin film,
a polypropylene-based resin is contained in an amount of 90 mass% or more based on a total amount of the laminate, and
a heat shrinkage rate in an MD direction and a heat shrinkage rate in a TD direction of the laminate after being heated in an oven at 150°C for 15 minutes, as determined by the following Equations (1) and (2), are less than 5.0% and less than 10%, respectively:

Heat shrinkage rate (%) in MD direction = (Length in MD direction before heating - Length in MD direction after heating)/Length in MD direction before heating × 100...(1)

(1)

Heat shrinkage rate (%) in TD direction = (Length in TD direction before heating - Length in TD direction after heating)/Length in TD direction before heating × 100...(2)

(2)

[2] The laminate for packaging according to [1], in which the gas barrier layer includes an adhesion layer containing a urethane-based resin or a polyvinyl alcohol-based resin, and the inorganic oxide layer on the adhesion layer from the base material layer side.

[3] The laminate for packaging according to [2], in which the adhesion layer is formed by drying a composition for forming an adhesion layer applied onto the base material layer at higher than 60°C to 130°C for 1 second to 2 minutes.

[4] The laminate for packaging according to [2] or [3], in which a sectional composite elastic modulus of the adhesion layer is 3.5 to 6.5 GPa.

[5] The laminate for packaging according to any one of [1] to [4], in which a heat shrinkage rate in the MD direction and a heat shrinkage rate in the TD direction of the base material layer after being heated in an oven at 150°C for 15 minutes, as determined by the above Equations (1) and (2), are 3.0% or more and less than 7.0% and 3.0% or more and less than 10%, respectively.

[6] The laminate for packaging according to any one of [1] to [5], further including a base material protective layer on the base material layer, in which

a heat shrinkage rate in the MD direction and a heat shrinkage rate in the TD direction of the base material protective layer after being heated in an oven at 150°C for 15 minutes, as determined by the above Equations (1) and (2), are less than 7.0% and less than 10%, respectively.

[7] The laminate for packaging according to any one of [1] to [6], in which a heat shrinkage rate in the MD direction and a heat shrinkage rate in the TD direction of the sealant layer after being heated in an oven at 150°C for 15 minutes, as determined by the above Equations (1) and (2), are less than 2.0% and less than 2.0%, respectively.

[8] The laminate for packaging according to any one of [1] to [7], in which the inorganic oxide layer contains aluminum oxide or silicon oxide.

[9] The laminate for packaging according to any one of [1] to [8], in which the gas barrier layer further includes a gas barrier coating layer on the inorganic oxide layer, and

the gas barrier coating layer is formed using a composition for forming a gas barrier coating layer containing at least one selected from the group consisting of a hydroxyl group-containing polymer compound, a metal alkoxide, a silane coupling agent, and a hydrolysate thereof.

[10] The laminate for packaging according to any one of [1] to [9], in which a thickness of the base material layer is 12 to 38 μm.

[11] The laminate for packaging according to [6], in which a ratio of a thickness of the base material protective layer to a thickness of the base material layer (the thickness of the base material protective layer/the thickness of the base material layer) is 0.5 to 2.0.

[12] The laminate for packaging according to any one of [1] to [11], which is used in a retort pouch.

[13] A packaging bag obtained by forming the laminate for packaging according to any one of [1] to [12] into a bag.

## Advantageous Effects of Invention

According to the present disclosure, there is provided a laminate for packaging capable of suppressing deterioration of gas barrier properties after a retort treatment even when polypropylene is used as a main constituent.

Furthermore, according to the present disclosure, there is provided a packaging bag using the laminate for packaging.

## Brief Description of Drawings

FIG. 1 is a schematic cross-sectional view illustrating a laminate for packaging according to an embodiment.
FIG. 2 is a schematic view illustrating a method for measuring a heat shrinkage rate during oven heating.

## Description of Embodiments

Hereinafter, preferred embodiments of the present disclosure will be described in detail occasionally with reference to the drawings. Note that, in the drawings, the same or corresponding parts are designated by the same reference signs, and redundant description will be omitted. Furthermore, the dimensional ratios in the drawings are not limited to as ratios illustrated in the drawings.

<Laminate for Packaging>

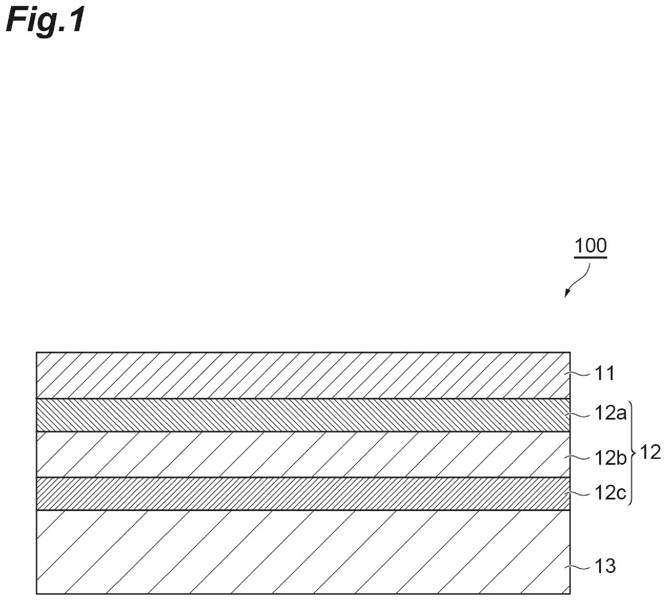

FIG. 1 is a schematic cross-sectional view illustrating a laminate for packaging (hereinafter, also simply referred to as "laminate") according to an embodiment. A laminate 100 illustrated in FIG. 1 includes a base material layer 11, a gas barrier layer 12, and a sealant layer 13 in this order. The gas barrier layer 12 and the sealant layer 13 may be bonded to each other by an adhesive layer (not illustrated). Each of the base material layer and the sealant layer is a polypropylene-based resin film containing a polypropylene-based resin. The gas barrier layer 12 can include, for example, an adhesion layer 12a, an inorganic oxide layer 12b, and a gas barrier coating layer 12c in this order from the base material layer 11 side from the viewpoint of improving the gas barrier properties against water vapor and oxygen.

The ratio of the thickness of the base material layer 11, the gas barrier layer 12, and the sealant layer 13 based on the thickness of the laminate 100 can be 50% or more, and may be 80% or more, or 90% or more from the viewpoint of suppressing the deterioration of the gas barrier properties after a retort treatment even when polypropylene is used as a main constituent. The laminate 100 may be substantially composed of these three layers.

[Base Material Layer]

The base material layer is a layer serving as a support of the laminate, and is a film containing a polypropylene-based resin.

Examples of the polypropylene-based resin include acid-modified polypropylene obtained by graft-modifying polypropylene with an unsaturated carboxylic acid, an anhydride of an unsaturated carboxylic acid, an ester of an unsaturated carboxylic acid, or the like. Furthermore, the polypropylene-based resin may be a homopolypropylene resin (PP), a propylene-ethylene random copolymer, a propylene-ethylene block copolymer, a propylene-$\alpha$ olefin copolymer, or the like.

Various additives such as a flame retardant, a slip agent, an antiblocking agent, an antioxidant, a light stabilizer, a tackifier, and an antistatic agent may be added to the polypropylene-based resin film constituting the base material layer.

The polypropylene-based resin film constituting the base material layer is a biaxially stretched film (biaxially stretched polypropylene-based resin film) from the viewpoint of impact resistance, heat resistance, water resistance, dimensional stability, and the like, and the viewpoint of setting the heat shrinkage rate in the TD direction/MD direction of the laminate to be less than a desired value. As a result, it is possible to suppress significant deterioration of the gas barrier properties after a retort treatment.

The thickness of the base material layer is not particularly limited. Depending on use application, the thickness can be 6 to 200 $\mu$m, but from the viewpoint of material reduction for reducing the environmental load and the viewpoint of obtaining excellent heat resistance and impact resistance and excellent gas barrier properties, the thickness may be 9 to 50 $\mu$m, 12 to 38 $\mu$m, or 18 to 30 $\mu$m.

The surface of the base material layer may be subjected to various pretreatments such as a corona treatment, a plasma treatment, and a flame treatment as long as the barrier performance is not impaired, or may be provided with a coat layer such as an adhesion-facilitating layer.

For example, the release amount of the corona treatment may be 2 W·min/m$^2$ or more or 10 W·min/m$^2$ or less. The corona treatment may be performed so that the wettability of the surface of the base material layer falls within the range described later. Both surfaces of the base material layer may be subjected to a corona treatment.

When an adhesion layer described later is not provided on the base material layer, from the viewpoint of setting the heat shrinkage rate in the TD direction/MD direction of the laminate to be less than a desired value, the base material layer can be heat-treated before the inorganic oxide layer is formed. This heat treatment can be performed in the same manner as the method for drying the adhesion layer.

As the base material layer, it is preferable to use a polypropylene-based resin film that causes a certain degree of heat shrinkage as compared with a polypropylene-based resin film adjusted to have low heat shrinkage, from the viewpoint of interlayer adhesion. When the adhesion layer is provided on the base material layer, the base material layer is thermally shrunk by a heat treatment (heating and drying of the adhesion layer) at the time of forming an adhesion layer, and micro irregularities are generated on the surface of the adhesion layer. The irregularities exert an anchor effect, and an effect of improving adhesion between the adhesion layer and the inorganic oxide layer can be expected.

A heat shrinkage rate in the MD direction and a heat shrinkage rate in the TD direction of the base material layer after being heated in an oven at 150°C for 15 minutes, as determined by the following Equations (1) and (2), are preferably 3.0% or more and less than 7.0% and 3.0% or more and less than 10%, respectively. The heat shrinkage rate of the base material layer is the heat shrinkage rate of the base material layer alone before the adhesion layer is provided, or before the heat treatment is performed when the adhesion layer is not provided.

Heat shrinkage rate (%) in MD direction = (Length in MD direction before heating - Length in MD direction after heating)/Length in MD direction before heating $\times$ 100...(1)

$$(1)$$

Heat shrinkage rate (%) in TD direction = (Length in TD direction before heating - Length in TD direction after heating)/Length in TD direction before heating $\times$ 100...(2)

$$(2)$$

From the viewpoint of achieving both adhesion and suppression of deterioration of barrier properties, the heat shrinkage rate in the MD direction of the base material layer after being heated in an oven at 150°C for 15 minutes, as determined by Equation (1), is more preferably 3.5% or more, 4.0% or more, 4.5% or more, or 5.0% or more, and is 6.5% or less. That is, the heat shrinkage rate in the MD direction of the base material layer may be 3.0% or more and less than 7.0%, 3.5% or more and less than 7.0%, 4.0% or more and less than 7.0%, 4.5% or more and 6.5% or less, or 5.0% or more and 6.5% or less.

The wettability is measured in accordance with JIS K6768:1999.

From the viewpoint of achieving both adhesion and suppression of deterioration of barrier properties, the heat shrinkage rate in the TD direction of the base material layer after being heated in an oven at 150°C for 15 minutes, as determined by Equation (2), is more preferably 4.0% or more, 5.0% or more, or 6.0% or more, and is 9.0% or less. That is, the heat shrinkage rate in the TD direction of the base material layer may be 3.0% or more and less than 10%, 4.0% or more and less than 10%, 5.0% or more and 9.0% or less, or 6.0% or more and 9.0% or less.

From the viewpoint of achieving both adhesion and suppression of deterioration of barrier properties, the larger one of the heat shrinkage rate in the MD direction and the heat shrinkage rate in the TD direction of the base material layer is preferably less than 6.5%, and more preferably 6.4% or less, 6.3% or less, 6.2% or less, 6.1% or less, or 6.0% or less.

[Adhesion Layer]

An adhesion layer (anchor coat layer) may be provided as a layer constituting the gas barrier layer on a surface of the base material layer on which the inorganic oxide layer is laminated. The adhesion layer is provided on the base material layer, and two effects of improving adhesion performance between the base material layer and the inorganic oxide layer and improving smoothness of the surface of the base material layer can be obtained. Note that, by improving the smoothness, the inorganic oxide layer is easily formed uniformly without defects, and high barrier properties are easily exhibited. The adhesion layer can be formed using a composition for forming an adhesion layer (anchor coating agent).

The anchor coating agent preferably contains a material (polyol, isocyanate, or the like) that produces a urethane-based resin. Examples of the urethane-based resin include a polyester-based polyurethane resin, a polyether-based polyurethane resin, and an acrylic polyurethane resin. Among them, from the viewpoint of heat resistance and interlayer adhesive strength, a polyester-based polyurethane resin or an acrylic polyurethane resin is preferable. In particular, an acrylic polyurethane resin is more preferable for a packaging material to be subjected to a retort treatment. The anchor coating agent may further contain a silane coupling agent such as $\gamma$-isocyanate propyltrimethoxysilane.

The thickness of the adhesion layer is not particularly limited, but is preferably in a range of 0.01 to 5 $\mu$m, more preferably in a range of 0.03 to 3 $\mu$m, and particularly preferably in a range of 0.05 to 2 $\mu$m. When the thickness of the adhesion layer is equal to or more than the lower limit value, a more sufficient interlayer adhesive strength tends to be obtained; on the other hand, when the thickness is equal to or less than the upper limit value, desired gas barrier properties tend to be easily exhibited.

As a method for applying the adhesion layer on the base material layer, a known coating method can be used without particular limitation, and examples thereof include an immersion method (dipping method); and a method using a spray, a coater, a printing machine, a brush, or the like. In addition, examples of the coater and the printing machine used in these methods and application methods thereof include a gravure coater using a direct gravure method, a reverse gravure method, a kiss reverse gravure method, or an offset gravure method, a reverse roll coater, a micro gravure coater, a chamber doctor combination coater, an air knife coater, a dip coater, a bar coater, a comma coater, and a die coater.

As the amount of application of the adhesion layer, the mass per 1 m² after applying and drying the anchor coating agent is preferably 0.01 to 5 g/m², and more preferably 0.03 to 3 g/m². When the amount of application is the above lower limit or more, the film formation tends to be sufficient; on the other hand, when the amount of application is the above upper limit or less, there is a tendency that it is easy to sufficiently perform drying and the solvent is less likely to remain.

A method for drying the adhesion layer is not particularly limited, and examples thereof include a method for drying in an oven set at a predetermined temperature, and a method using a drier attached to a coater, for example, an arch dryer, a floating dryer, a drum dryer, an infrared dryer, or the like.

From the viewpoint of setting the heat shrinkage rate of the laminate in the TD direction/MD direction to be less than a desired value, the drying temperature is preferably higher than 60°C, and may be 70°C or higher, or 75°C or higher. When the drying temperature is higher than 60°C, the base material layer can be moderately shrunk as compared with a case where the drying temperature is 60°C or lower. This makes it possible to suppress heat shrinkage as a laminate after a retort treatment. The upper limit of the drying temperature is not particularly limited, but can be 130°C since it is preferable to set the drying temperature lower than the melting point of the polypropylene-based resin contained in the base material layer. As a result, the base material layer is less likely to soften, and wrinkles and curls can be suppressed. From this viewpoint, the drying temperature can be 125°C or lower. The drying time can be, for example, about 1 second to 2 minutes. That is, the adhesion layer may be formed by drying a composition for forming an adhesion layer (anchor coating agent) applied onto the base material layer at higher than 60°C to 130°C for 1 second to 2 minutes.

As the adhesion layer, a polyvinyl alcohol-based resin can be used instead of the polyurethane resin. The polyvinyl alcohol-based resin may have a vinyl alcohol unit in which a vinyl ester unit is saponified, and examples thereof include polyvinyl alcohol (PVA) and an ethylene-vinyl alcohol copolymer (EVOH).

Examples of PVA include a resin obtained by polymerizing a vinyl ester such as vinyl acetate, vinyl formate, vinyl propionate, vinyl valerate, vinyl caprate, vinyl laurate, vinyl stearate, vinyl pivalate, or vinyl versatate alone, and then saponifying the polymerized vinyl ester. The PVA may be a modified PVA subjected to copolymerization-modification or post-modification. The modified PVA can be obtained, for example, by copolymerizing a vinyl ester with an unsaturated monomer copolymerizable with a vinyl ester, and then saponifying the resultant copolymer. Examples of the unsaturated monomer copolymerizable with a vinyl ester include olefins such as ethylene, propylene, isobutylene, $\alpha$-octene, $\alpha$-dodecene, and $\alpha$-octadecene; hydroxy group-containing $\alpha$-olefins such as 3-butene-1-ol, 4-pentyn-1-ol, and 5-hexen-1-ol; unsaturated acids such as acrylic acid, methacrylic acid, crotonic acid, maleic acid, maleic anhydride, itaconic acid, and undecylenic acid; nitriles such as acrylonitrile and methacrylonitrile; amides such as diacetone acrylamide, acrylamide, and methacrylamide; olefin sulfonic acids such as ethylene sulfonic acid, allyl sulfonic acid, and methallyl sulfonic acid; vinyl compounds such as alkyl vinyl ether, dimethyl allyl vinyl ketone, N-vinyl pyrrolidone, vinyl chloride, vinyl ethylene carbonate, 2,2-dialkyl-4-vinyl-1,3-dioxolane, glycerin monoallyl ether, and 3,4-diacetoxy-1-butene; vinylidene chloride, 1,4-diacetoxy-2-butene, and vinylene carbonate.

The polymerization degree of the PVA is preferably 300 to 3000. When the polymerization degree is less than 300, the barrier properties tend to decrease, and when the polymerization degree is more than 3000, the viscosity is too high, and the coating suitability is likely to deteriorate. The saponification degree of the PVA is preferably 90 mol% or more, more preferably 95 mol% or more, and still more preferably 99 mol% or more. Furthermore, the saponification degree of the PVA may be 100 mol% or less or 99.9 mol% or less. The polymerization degree and the saponification degree of the PVA can be measured according to the methods described in JIS K 6726 (1994).

The EVOH is generally obtained by saponifying a copolymer of ethylene with acid vinyl ester such as vinyl acetate, vinyl formate, vinyl propionate, vinyl valerate, vinyl caprate, vinyl laurate, vinyl stearate, vinyl pivalate, or vinyl versatate.

The polymerization degree of the EVOH is preferably 300 to 3000. When the polymerization degree is less than 300, the barrier properties tend to decrease, and when the polymerization degree is more than 3000, the viscosity is too high, and the coating suitability is likely to deteriorate. The saponification degree of the vinyl ester component of the EVOH is preferably 90 mol% or more, more preferably 95 mol% or more, and still more preferably 99 mol% or more. Furthermore, the saponification degree of the EVOH may be 100 mol% or less or 99.9 mol% or less. The saponification degree of the EVOH is determined from the peak area of hydrogen atoms contained in the vinyl ester structure and the peak area of hydrogen atoms contained in the vinyl alcohol structure through nuclear magnetic resonance ($^1$H-NMR) measurement.

The ethylene unit content of the EVOH is 10 mol% or more, more preferably 15 mol% or more, still more preferably 20 mol% or more, and particularly preferably 25 mol% or more. Furthermore, the ethylene unit content of the EVOH is preferably 65 mol% or less, more preferably 55 mol% or less, and still more preferably 50 mol% or less. When the ethylene unit content is 10 mol% or more, the gas barrier properties and dimensional stability under high humidity can be maintained favorably. On the other hand, when the ethylene unit content is 65 mol% or less, gas barrier properties can be enhanced. The ethylene unit content of the EVOH can be determined by the NMR method.

When a polyvinyl alcohol-based resin is used as an adhesion layer, the adhesion layer can be formed using a polyvinyl alcohol-based resin solution. The method for applying a polyvinyl alcohol-based resin solution onto the base material layer and drying the solution is as described above.

The adhesion layer can also be formed using a composition for forming a gas barrier coating layer described later.

The sectional composite elastic modulus of the adhesion layer is preferably 3.5 to 6.5 GPa. When the composite elastic modulus is 3.5 GPa or more, the adhesion of the laminate is easily improved, and when the composite elastic modulus is 6.5 GPa or less, the bending resistance of the laminate is easily improved. From these viewpoints, the sectional composite elastic modulus of the adhesion layer is more preferably 3.8 GPa or more, and still more preferably 4.0 GPa or more, and is more preferably 6.3 GPa or less, and still more preferably 6.0 GPa or less. That is, the sectional composite elastic modulus of the adhesion layer may be 3.5 to 6.5 GPa, 3.8 to 6.3 GPa, or 4.0 to 6.0 GPa.

The sectional composite elastic modulus of the adhesion layer can be measured with a scanning probe microscope (SPM).

[Inorganic Oxide Layer]

By the inorganic oxide layer, high gas barrier properties can be obtained with a very thin thickness to such an extent that does not affect the recyclability of the laminate. Examples of the inorganic oxide contained in the inorganic oxide layer include aluminum oxide, silicon oxide, magnesium oxide, and tin oxide. From the viewpoint of transparency and barrier properties, the inorganic oxide may be aluminum oxide or silicon oxide. Furthermore, from the viewpoint of excellent tensile stretchability during processing, the inorganic oxide may be silicon oxide.

The O/Si ratio of the silicon oxide layer is desirably 1.7 or more. When the O/Si ratio is 1.7 or more, a content ratio of metal Si is suppressed, and good transparency can be easily obtained. Furthermore, the O/Si ratio is preferably 2.0 or less. When the O/Si ratio is 2.0 or less, it is possible to prevent the silicon oxide layer from becoming too hard due to an increase in crystallinity of SiO, and good tensile resistance can be obtained. Thereby, it is possible to suppress occurrence of cracks in the silicon oxide layer when the gas barrier coating layer is laminated. Furthermore, the base material layer may shrink due to heat during a retort treatment even after molding into a packaging bag, but when the O/Si ratio is 2.0 or less, the silicon oxide layer easily follows the shrinkage, and a decrease in barrier properties can be suppressed. From the viewpoint of more sufficiently obtaining these effects, the O/Si ratio of the silicon oxide layer is preferably 1.75 or more and 1.9 or less, and more preferably 1.8 or more and 1.85 or less.

The O/Si ratio of the silicon oxide layer can be determined by X-ray photoelectron spectroscopy (XPS). For example, the O/Si ratio can be measured using an X-ray photoelectron spectroscopy analyzer (manufactured by JEOL Ltd., product name: JPS-90MXV) as a measurement device and non-monochromatic MgKα (1253.6 eV) as an X-ray source, with an X-ray output of 100 W (10 kV-10 mA). For quantitative analysis for determining the O/Si ratio, relative sensitivity factors of 2.28 for O1s and 0.9 for Si2p, respectively, can be used.

The O/Al ratio of the aluminum oxide layer is desirably 1.4 or more. When the O/Al ratio is 1.4 or more, a content ratio of uncoupled bonds of aluminum atoms is suppressed, and good transparency can be easily obtained. Furthermore, the O/Al ratio is preferably 2.0 or less. When the O/Al ratio is 2.0 or less, it is possible to prevent the vapor deposition layer from becoming too hard due to an increase in the crystallinity of AlO, and good tensile resistance can be obtained. Thereby, it is possible to suppress occurrence of cracks in the aluminum oxide layer when the gas barrier coating layer is laminated. Furthermore, the base material layer may shrink due to heat during a retort treatment even after molding into a packaging bag, but when the O/Al ratio is 2.0 or less, the aluminum oxide layer easily follows the shrinkage, and a decrease in barrier properties can be suppressed. From the viewpoint of more sufficiently obtaining these effects, the O/Al ratio is preferably 1.45 or more and 1.9 or less, and more preferably 1.5 or more and 1.85 or less.

The O/Al ratio of the aluminum oxide layer can be determined by X-ray photoelectron spectroscopy (XPS). For example, the O/Al ratio can be measured using an X-ray photoelectron spectroscopy analyzer (manufactured by JEOL Ltd., product name: JPS-90MXV) as a measurement device and non-monochromatic MgKα (1253.6 eV) as an X-ray source, with an X-ray output of 100 W (10 kV-10 mA). For quantitative analysis for determining the O/Al ratio, relative sensitivity factors of 2.28 for O1s and 0.6 for Al2p, respectively, can be used.

The film thickness of the inorganic oxide layer is preferably 10 nm or more and 50 nm or less. When the film thickness is 10 nm or more, sufficient water vapor barrier properties can be obtained. In addition, when the film thickness is 50 nm or less, it is possible to suppress generation of cracks due to deformation of the thin film due to internal stress and to suppress deterioration of water vapor barrier properties. Note that, when the film thickness exceeds 50 nm, the cost tends to increase due to an increase in the amount of material used, an increase in the film formation time, and the like, which is not preferable from the economic viewpoint. From the same viewpoint as described above, the film thickness of the inorganic oxide layer is more preferably 20 nm or more and 40 nm or less.

The inorganic oxide layer can be formed by, for example, vacuum film formation. In the vacuum film formation, a physical vapor deposition method or a chemical vapor deposition method can be used. Examples of the physical vapor deposition method include a vacuum vapor deposition method, a sputtering method, and an ion plating method, but are not limited thereto. Examples of the chemical vapor deposition method include a thermal CVD method, a plasma CVD method, and a photo CVD method, but are not limited thereto.

In the vacuum film formation, a resistance heating type vacuum vapor deposition method, an electron beam (EB) heating type vacuum vapor deposition method, an induction heating type vacuum vapor deposition method, a sputtering method, a reactive sputtering method, a dual magnetron sputtering method, a plasma chemical vapor deposition method (PECVD method), and the like are particularly preferably used. However, in consideration of productivity, the vacuum vapor deposition method is the most excellent at the present time. As heating means of the vacuum vapor deposition method, it is preferable to use any one of an electron beam heating method, a resistance heating method, and an induction heating method.

[Gas Barrier Coating Layer]

A gas barrier coating layer may be formed on the inorganic oxide layer. The gas barrier coating layer may be a layer formed by using a composition for forming a gas barrier coating layer containing at least one selected from the group consisting of a hydroxyl group-containing polymer compound, a metal alkoxide, a silane coupling agent, and a hydrolysate thereof.

The gas barrier coating layer is a coating layer having gas barrier properties, and can be formed by using a composition for forming a gas barrier coating layer (hereinafter, also referred to as a coating agent) containing, as a main component, an aqueous solution or a water/alcohol mixed solution containing at least one selected from the group consisting of a hydroxyl group-containing polymer compound, a metal alkoxide, a silane coupling agent, and a hydrolysate thereof.

From the viewpoint of more sufficiently maintaining the gas barrier properties after a hot water treatment such as a retort treatment, the coating agent preferably contains at least a silane coupling agent or a hydrolysate thereof, more preferably contains at least one selected from the group consisting of a hydroxyl group-containing polymer compound, a metal alkoxide, and a hydrolysate thereof, a silane coupling agent, or a hydrolysate thereof, and still more preferably contains a hydroxyl group-containing polymer compound or a hydrolysate thereof, a metal alkoxide or a hydrolysate thereof, and a silane coupling agent or a hydrolysate thereof. The coating agent can be prepared by, for example, mixing a metal alkoxide and a silane coupling agent with a solution obtained by dissolving a hydroxyl group-containing polymer compound, which is a water-soluble polymer, in an aqueous (water or water/alcohol mixed) solvent, or by mixing a material subjected to a treatment such as hydrolysis of those components in advance.

Each component contained in the coating agent for forming a gas barrier coating layer will be described in detail. Examples of the hydroxyl group-containing polymer compound used in the coating agent include polyvinyl alcohol, polyvinyl pyrrolidone, starch, methyl cellulose, carboxymethyl cellulose, and sodium alginate. Among them, polyvinyl alcohol (PVA) is preferably used in the coating agent for the gas barrier coating layer because the gas barrier properties are particularly excellent.

From the viewpoint of obtaining excellent gas barrier properties, the gas barrier coating layer is preferably formed from a composition containing at least one selected from the group consisting of a metal alkoxide represented by the following General Formula (I) and a hydrolysate thereof.

$$M(OR^1)_m(R^2)_{n-m}\cdots \qquad (I)$$

In the above General Formula (I), $R^1$ and $R^2$ are each independently a monovalent organic group having 1 to 8 carbon atoms, and preferably an alkyl group such as a methyl group or an ethyl group. M represents an n-valent metal atom such as Si, Ti, Al, or Zr. m is an integer of 1 to n. When a plurality of $R^1$s or $R^2$s are present, $R^1$s or $R^2$s may be the same or different.

Specific examples of the metal alkoxide include tetraethoxysilane $[Si(OC_2H_5)_4]$ and triisopropoxyaluminum $[Al(O-2'-C_3H_7)_3]$. Tetraethoxysilane and triisopropoxyaluminum are preferable because they are relatively stable in an aqueous solvent after hydrolysis.

Examples of the silane coupling agent include a compound represented by the following General Formula (II).

$$Si(OR^{11})_p(R^{12})_{3-p}R^{13}\cdots \qquad (II)$$

In the above General Formula (II), $R^{11}$ represents an alkyl group such as a methyl group or an ethyl group, $R^{12}$ represents a monovalent organic group such as an alkyl group, an aralkyl group, an aryl group, an alkenyl group, an alkyl group substituted with an acryloxy group, or an alkyl group substituted with a methacryloxy group, $R^{13}$ represents a monovalent organic functional group, and p represents an integer of 1 to 3. When a plurality of $R^{11}$s or $R^{12}$s are present, $R^{11}$s or $R^{12}$s may be the same or different. Examples of the monovalent organic functional group represented by $R^{13}$ include a glycidyloxy group, an epoxy group, a mercapto group, a hydroxyl group, an amino group, an alkyl group substituted with a halogen atom, and a monovalent organic functional group containing an isocyanate group.

Specific examples of the silane coupling agent include silane coupling agents such as vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, and γ-methacryloxypropylmethyldimethoxysilane.

Furthermore, the silane coupling agent may be a multimer obtained by polymerizing the compound represented by the above General Formula (II). The multimer is preferably a trimer, and more preferably 1,3,5-tris(3-trialkoxysilylalkyl) isocyanurate. This is a condensation polymer of 3-isocyanate alkyl alkoxysilane. This 1,3,5-tris(3-trialkoxysilylalkyl) isocyanurate has no chemical reactivity in the isocyanate moiety, but it is known that the reactivity is secured by the polarity of the nurate moiety. In general, like 3-isocyanate alkyl alkoxysilane, 1,3,5-tris(3-trialkoxysilylalkyl)isocyanurate is known to be an adhesion improver which is added to an adhesive. Therefore, by adding 1,3,5-tris(3-trialkoxysilylalkyl)isocyanurate to the hydroxyl group-containing polymer compound, the water resistance of the gas barrier coating layer can be improved by hydrogen bonding. Even though 3-isocyanate alkyl alkoxysilane has high reactivity and low liquid stability, 1,3,5-tris(3-trialkoxysilylalkyl)isocyanurate is easily dispersed in an aqueous solution, although the nurate moiety is not water soluble due to its polarity, and can maintain a liquid viscosity stably. Water resistance performance is equivalent between 3-isocyanate alkyl alkoxysilane and 1,3,5-tris(3-trialkoxysilylalkyl)isocyanurate.

Some 1,3,5-tris(3-trialkoxysilylalkyl)isocyanurate is produced by thermal condensation of 3-isocyanatopropyl alkoxysilane, and may contain the raw material 3-isocyanatopropyl alkoxysilane to such an extent that the physical properties thereof are not hindered. 1,3,5-tris(3-trialkoxysilylpropyl)isocyanurate is more preferable, and 1,3,5-tris(3-trimethoxysilylpropyl)isocyanurate is still more preferable. Since this methoxy group has a high hydrolysis rate, and those including a propyl group can be obtained at a comparatively low price, 1,3,5-tris(3-trimethoxysilylpropyl)isocyanurate is practically advantageous.

To the coating agent, an isocyanate compound or a known additive such as a dispersant, a stabilizer, a viscosity modifier, or a colorant can be added as necessary as long as the gas barrier properties are not impaired.

The thickness of the gas barrier coating layer is preferably 50 to 1000 nm and more preferably 100 to 500 nm. When the thickness of the gas barrier coating layer is 50 nm or more, more sufficient gas barrier properties tend to be obtained, and when the thickness is 1000 nm or less, sufficient flexibility tends to be maintained.

A coating liquid for forming a gas barrier coating layer can be applied by, for example, a dipping method, a roll coating method, a gravure coating method, a reverse gravure coating method, an air knife coating method, a comma coating method, a die coating method, a screen printing method, a spray coating method, a gravure offset method, or the like. A coating film formed by applying this coating liquid can be dried by, for example, a hot-air drying method, a hot-roll drying method, a high frequency irradiation method, an infrared irradiation method, a UV irradiation method, or a combination thereof.

The temperature for drying the coating film can be, for example, 50 to 150°C, and is preferably set to 70 to 100°C. When the temperature during drying is within the above range, generation of cracks in the inorganic oxide layer or the gas barrier coating layer can be further suppressed, and excellent barrier properties can be exhibited. The drying time can be, for example, about 1 second to 2 minutes.

The gas barrier coating layer may be formed by using a coating agent containing a polyvinyl alcohol-based resin and a silane compound. An acid catalyst, an alkali catalyst, a photopolymerization initiator, or the like may be added to the coating agent as necessary.

The polyvinyl alcohol-based resin is as described above. Furthermore, examples of the silane compound include a silane coupling agent, polysilazane, and siloxane, and specific examples thereof include tetramethoxysilane, tetraethoxysilane, glycidoxypropyltrimethoxysilane, acryloxypropyltrimethoxysilane, and hexamethyldisilazane.

[Base Material Protective Layer]

For the configuration of the base material protective layer, the contents described above regarding the configuration of the base material layer can be appropriately referred to. When the laminate includes a base material protective layer, the base material layer and the gas barrier layer are more easily protected from an external force, and deterioration of the gas barrier properties after a retort treatment is more easily suppressed as compared with a case where the laminate does not include a base material protective layer.

From the viewpoint of achieving both rigidity as a packaging material and bag-making suitability, the ratio of the thickness of the base material protective layer to the thickness of the base material layer (the thickness of the base material protective layer/the thickness of the base material layer) can be 0.01 to 10, and may be 0.1 to 5 or 0.5 to 2.0. When the ratio of the thickness is equal to or more than the lower limit value, the function as the base material protective layer is easily exhibited, and when the ratio of the thickness is equal to or less than the upper limit value, the deterioration of the gas barrier properties of the laminate after a retort treatment is easily suppressed.

A heat shrinkage rate in the MD direction and a heat shrinkage rate in the TD direction of the base material protective layer after being heated in an oven at 150°C for 15 minutes, as determined by the following Equations (1) and (2), are preferably less than 7.0% and less than 10%, respectively.

Heat shrinkage rate (%) in MD direction = (Length in MD direction before heating - Length in MD direction after heating)/Length in MD direction before heating × 100...(1)          (1)

Heat shrinkage rate (%) in TD direction = (Length in TD direction before heating - Length in TD direction after heating)/Length in TD direction before heating × 100...(2)          (2)

From the viewpoint of suppressing the deterioration of barrier properties, the heat shrinkage rate in the MD direction of the base material protective layer after being heated in an oven at 150°C for 15 minutes, as determined by Equation (1), is more preferably 3.0% or more, 3.5% or more, 4.0% or more, 4.5% or more, or 5.0% or more, and is 6.5% or less. That is, the heat shrinkage rate in the MD direction of the base material protective layer may be less than 7.0%, 3.0% or more and less than 7.0%, 3.5% or more and less than 7.0%, 4.0% or more and less than 7.0%, 4.5% or more and 6.5% or less, or 5.0% or more and 6.5% or less.

From the viewpoint of achieving both suppression of deterioration of barrier properties and suppression of curling of the laminate, the heat shrinkage rate in the TD direction of the base material protective layer after being heated in an oven at 150°C for 15 minutes, as determined by Equation (2), is more preferably 3.0% or more, 4.0% or more, 5.0% or more, or 5.5% or more, and is 9.0% or less. That is, the heat shrinkage rate in the TD direction of the base material protective layer may be less than 10%, 3.0% or more and less than 10%, 4.0% or more and less than 10%, 5.0% or more and 9.0% or less, or 5.5% or more and 9.0% or less.

[Printed Layer]

The laminate may include a printed layer. The printed layer can be provided on at least one surface of the base material layer, on at least one surface of the base material protective layer, or on the surface of the gas barrier coating layer. The printed layer is provided at a position visible from the outside of the laminate for the purpose of displaying information on the contents, identifying the contents, improving the concealability, or improving the designability of the packaging bag. An image to be formed as the printed layer is not particularly limited, and characters, patterns, symbols, combinations thereof, and the like are represented.

Printing methods and printing inks are not particularly limited, and existing printing methods and printing inks are appropriately selected in consideration of printing suitability for a film, designability such as color tone, adhesion, safety as food containers, and the like.

As the printing methods, for example, a gravure printing method, an offset printing method, a gravure offset printing method, a flexographic printing method, an inkjet printing method, and the like can be used. Among them, the gravure printing method can be preferably used from the viewpoint of productivity and high definition of a pattern, and the flexographic printing method can be preferably used from the viewpoint of environmental load.

Examples of the printing inks (resin) include a biomass-derived ink, a urethane-based resin, a copolymer resin of vinyl chloride and vinyl acetate, and an acrylic resin. From the viewpoint of environmental load, the printed layer is preferably formed using a biomass-derived ink.

In order to enhance the adhesion of the printed layer, the surface of a layer on which the printed layer is provided may be subjected to various pretreatments such as a corona treatment, a plasma treatment, and a flame treatment, or may be provided with a coat layer such as an adhesion-facilitating layer.

[Adhesive Layer]

The gas barrier layer and the sealant layer, or the base material layer and the base material protective layer can be laminated with an adhesive layer interposed therebetween. As the material of the adhesive, for example, a polyester-isocyanate-based resin, a urethane resin, a polyether-based resin, or the like can be used. In order to use the packaging bag for retort applications, a retort-resistant two-component curable urethane-based adhesive can be preferably used. Examples of the method for forming and laminating an adhesive layer include known methods such as a dry lamination method and a non-solvent lamination method.

In the case of a dry lamination method, the amount of application of the adhesive may be, for example, 0.5 to 10 $g/m^2$ from the viewpoint of obtaining a desired adhesive strength, shape conformity, workability, and the like. The temperature for drying the adhesive layer can be, for example, 50 to 150°C, and is preferably 70 to 100°C. The drying time can be, for example, about 1 second to 2 minutes.

In the case of using a non-solvent lamination method, the amount of application of the adhesive can be reduced to 0.5 to 3 $g/m^2$ as compared with the case of using a dry lamination method. Thereby, the content ratio of polypropylene in the entire laminate for packaging can be further improved. Further, when the laminate for packaging is heat-sealed, heat conduction from a heat seal bar is improved, the sealing time and the temperature can be reduced, and occurrence of wrinkles and the like associated with heat-sealing can be suppressed.

When the base material protective layer and the base material layer are bonded to each other with the adhesive layer interposed therebetween, the wettability of the surface of the base material protective layer on the adhesive layer side is preferably 29 dyne or more, and more preferably 30 dyne or more. Thereby, there is a tendency that bag breakage resistance and vibration resistance are further improved. The wettability of the surface of the base material layer on the adhesive layer side is preferably 32 dyne or less, and more preferably 31 dyne or less. Thereby, the printed layer tends to be easily detached at the time of recycling.

The adhesive layer between the base material layer and the printed layer may be formed by, for example, the following procedures (1) to (4).

(1) An adhesive is applied to the surface of the base material layer to form a coating film.
(2) The coating film is dried.
(3) The base material layer and the printed layer are bonded to each other with a dried product of the coating film interposed therebetween and are pressurized.
(4) The dried product of the coating film is cured to form an adhesive layer.

By drying the adhesive applied to the base material layer and then bringing it into contact with the printed layer, it is possible to prevent the adhesive from diffusing into the printed layer. Thereby, the printed layer tends to be easily detached at the time of recycling.

[Sealant Layer]

The sealant layer is a layer that imparts sealing properties by heat sealing in the laminate, and is a film containing a polypropylene-based resin.

Examples of the polypropylene-based resin include acid-modified polypropylene obtained by graft-modifying polypropylene with an unsaturated carboxylic acid, an anhydride of an unsaturated carboxylic acid, an ester of an unsaturated carboxylic acid, or the like. Furthermore, the polypropylene-based resin may be a homopolypropylene resin (PP), a propylene-ethylene random copolymer, a propylene-ethylene block copolymer, a propylene-$\alpha$ olefin copolymer, or the like.

Various additives such as a flame retardant, a slip agent, an antiblocking agent, an antioxidant, a light stabilizer, a tackifier, and an antistatic agent may be added to the polypropylene-based resin film constituting the sealant layer.

The polypropylene-based resin film constituting the sealant layer is preferably a non-stretched film (non-stretched polypropylene-based resin film) from the viewpoint of enhancing the sealing properties by heat sealing.

The thickness of the sealant layer is determined by the mass of the contents, the shape of the packaging bag, and the like, but may be about 30 to 150 $\mu$m, or 50 to 80 $\mu$m.

The heat shrinkage rate in the MD direction and the heat shrinkage rate in the TD direction of the sealant layer after being heated in an oven at 150°C for 15 minutes, as determined by the following Equations (1) and (2), are preferably less than 2.0% and less than 2.0%, respectively.

$$\text{Heat shrinkage rate (\%) in MD direction} = (\text{Length in MD direction before heating - Length in MD direction after heating})/\text{Length in MD direction before heating} \times 100 ...(1) \quad (1)$$

$$\text{Heat shrinkage rate (\%) in TD direction} = (\text{Length in TD direction before heating - Length in TD direction after heating})/\text{Length in TD direction before heating} \times 100 ...(2) \quad (2)$$

From the viewpoint of suppressing the deterioration of barrier properties, the heat shrinkage rate in the MD direction of the sealant layer after being heated in an oven at 150°C for 15 minutes, as determined by Equation (1), is more preferably 0% or more or 0.5% or more, and is 1.5% or less. That is, the heat shrinkage rate in the MD direction of the sealant layer may be less than 2.0%, 0% or more and less than 2.0%, or 0.5% or more and 1.5% or less.

From the viewpoint of suppressing the curling of the laminate, the heat shrinkage rate in the TD direction of the sealant layer after being heated in an oven at 150°C for 15 minutes, as determined by Equation (2), is more preferably 0.2% or more, 0.3% or more, or 0.4% or more, and is 1.5% or less. That is, the heat shrinkage rate in the TD direction of the sealant layer may be less than 2.0%, 0.2% or more and less than 2.0%, 0.3% or more and 1.5% or less, or 0.4% or more and 1.5% or less.

Examples of the method for forming the sealant layer include known lamination methods such as a dry lamination method in which a film-shaped sealant layer made of the polypropylene-based resin described above is bonded to a gas barrier layer using an adhesive such as a one-component curable or two-component curable urethane-based adhesive, and a non-solvent dry lamination method (non-solvent lamination method) in which a film-shaped sealant layer is bonded to a gas barrier layer using a solvent-free adhesive.

Among the formation methods, a dry lamination method is preferable because it provides high resistance to a retort treatment, particularly a high-temperature hot water treatment at 120°C or higher. In a non-solvent lamination method, a retort-resistant urethane-based adhesive can be preferably used.

[Content of Polypropylene]

The laminate contains 90 mass% or more of a polypropylene-based resin based on the total amount of the laminate. Even when the laminate contains polypropylene as a main constituent as described above, deterioration of the gas barrier properties after a retort treatment can be suppressed. Furthermore, the laminate can be said to be a (mono-material) packaging material made of a single material, and is excellent in recyclability. From the viewpoint of further improving the recyclability, the content of polypropylene in the laminate may be 92 mass% or more or 95 mass% or more based on the total amount of the laminate.

[Heat Shrinkage Rate of Laminate]

A heat shrinkage rate in the MD direction and a heat shrinkage rate in the TD direction of the laminate after being heated in an oven at 150°C for 15 minutes, as determined by the following Equations (1) and (2), are less than 5.0% and less than 10%, respectively.

$$\text{Heat shrinkage rate (\%) in MD direction} = (\text{Length in MD direction before heating - Length in MD direction after heating})/\text{Length in MD direction before heating} \times 100 ...(1) \tag{1}$$

$$\text{Heat shrinkage rate (\%) in TD direction} = (\text{Length in TD direction before heating - Length in TD direction after heating})/\text{Length in TD direction before heating} \times 100 ...(2) \tag{2}$$

Note that the length before heating is a length measured at room temperature (25°C), and the length after heating is a length measured at room temperature (25°C) after heating to 150°C and then cooling.

When the heat shrinkage rate of the laminate satisfies the above conditions, even in a case where the laminate is a mono-material laminate containing polypropylene as a main constituent (the content of polypropylene in the laminate is 90 mass% or more), deterioration of the gas barrier properties after a retort treatment can be suppressed.

From the viewpoint of further suppressing the deterioration of gas barrier properties after a retort treatment, the heat shrinkage rate in the MD direction of the laminate after being heated in an oven at 150°C for 15 minutes, as determined by the above Equation (1), may be 4.5% or less, 4.0% or less, 3.5% or less, or 3.0% or less. The lower limit of the heat shrinkage rate can be 0% or 1% since it is not preferable that the heat shrinkage rate is negative. That is, the heat shrinkage rate in the MD direction of the laminate is less than 5.0%, and may be 0% or more and less than 5.0%, 0% or more and 4.5% or less, 0% or more and 4.0% or less, 1% or more and 3.5% or less, or 1% or more and 3.0% or less.

From the viewpoint of further suppressing the deterioration of gas barrier properties after a retort treatment, the heat shrinkage rate in the TD direction of the laminate after being heated in an oven at 150°C for 15 minutes, as determined by the above Equation (2), may be 9.0% or less, 7.5% or less, less than 6.5%, or 6.0% or less. The lower limit of the heat shrinkage rate can be 0% or 1% since it is not preferable that the heat shrinkage rate is negative. That is, the heat shrinkage rate in the TD direction of the laminate is less than 10%, and may be 0% or more and less than 10%, 0% or more and 9.0% or less, 0% or more and 7.5% or less, 1% or more and less than 6.5%, or 1% or more and 6.0% or less.

The heat shrinkage rate of the laminate described above can be determined based on a change in the length in the MD direction and the length in the TD direction before and after heating a measurement sample in an oven at 150°C for 15 minutes. Specifically, for example, the heat shrinkage rate can be measured by the method described in Examples. By observing the heat shrinkage behavior of the laminate at 150°C, the degree of barrier deterioration of the laminate with respect to the retort treatment can be grasped. The heat shrinkage rate of the laminate can be adjusted by a heat treatment for the base material layer, drying conditions at the time of forming an adhesion layer, and the like as described above.

Since the laminate contains polypropylene as a main constituent and can be subjected to a retort treatment at a high temperature, the laminate can be suitably used for retort pouch applications.

<Method for Producing Laminate>

A method for producing a laminate can include:

a step of applying a composition for forming an adhesion layer onto a base material layer and then drying the composition at higher than 60°C to form an adhesion layer on the base material layer;
a step of laminating an inorganic oxide layer and optionally a gas barrier coating layer on the adhesion layer to form a gas barrier layer; and
a step of forming a sealant layer on the gas barrier layer by lamination.

Furthermore, the method for producing a laminate can include:

a step of heating a base material layer at higher than 60°C;
a step of laminating an inorganic oxide layer and optionally gas barrier coating layer on the base material layer to form a gas barrier layer; and
a step of forming a sealant layer on the gas barrier layer by lamination.

As described above, from the viewpoint of setting the heat shrinkage rate of the laminate in the TD direction/MD direction to be less than a desired value, it is preferable to appropriately shrink the base material layer by applying heat at higher than 60°C to the base material layer before the inorganic oxide layer is formed. Thereby, heat shrinkage as a laminate after a retort treatment can be suppressed, and deterioration of the gas barrier properties of the laminate after a retort treatment can be suppressed.

\<Packaging Bag\>

The packaging bag is obtained by forming the laminate described above into a bag, and is not particularly limited in shape, and for example, the packaging bag may be obtained by folding one laminate in half so that the portions of the sealant layer face each other and then heat-sealing the folded laminate on three sides to form a bag shape, may be obtained by superposing two laminates so that the sealant layers face each other and then heat-sealing the four sides of the superposed laminates to form a bag shape, or may be obtained by superposing two laminates so that the sealant layers face each other and then sealing the laminates together by also interposing the bottom material to form a self-supporting standing pouch.

In the packaging bag, food products, medicinal products, and the like are stored as contents, and a heat sterilization treatment such as a retort treatment can be performed.

The retort treatment is generally a treatment for pressurizing and sterilizing microorganisms such as mold, yeast, and bacteria in order to preserve food products, medicinal products, and the like. Usually, the packaging bag that packages a food product or the like is pressure-sterilized under conditions of 105 to 140°C and 0.15 to 0.30 MPa for 10 to 120 minutes. There are steam type retort apparatuses that utilize heated steam, and there are hot-water type retort apparatuses that utilize pressurized heated water, with each type being appropriately used according to the sterilization conditions of food products or the like as contents.

According to "Standards for Foods and Additives" (Ministry of Health and Welfare Notification No. 370, 1959) "Retort pouch food", it is required to sterilize a food product by a method having a central temperature of 120°C for 4 minutes or a method having an effect equal to or higher than this, and this is determined on the basis of a temperature and time necessary for killing Clostridium botulinum spores which are heat-resistant.

As an index of the retort sterilization condition, an F value is used. The F value is a value obtained by converting a sterilization effect in all heating steps from temperature increase to temperature decrease into a sterilization effect at 121°C (250°F), and can be converted by the following equation.

F value:

$$F = t \times 10^{((T - 121)/Z)}$$

Z value: temperature increase for setting sterilization time to 1/10

(wherein the Z value is usually 12°C, which is the Z value of Clostridium botulinum spores)

Even under treatment conditions having different heating temperatures and heating times, the same sterilization effect can be obtained as long as the F value is the same.

For example, from the above equation, the F value of the retort treatment at 121°C for 30 minutes is 30, and in the case of a retort treatment temperature of 130°C, the same sterilization effect can be obtained by the treatment for 5.34 minutes, and in the case of a retort treatment temperature of 115°C, the same sterilization effect can be obtained by the treatment for 95 minutes.

The packaging bag can be particularly suitably used for a purpose of performing a retort treatment at a temperature of 120°C or higher. The F value of the retort package is 30 or more, and more preferably 35 or more.

The packaging bag is excellent in recyclability and storage stability of contents because deterioration of the gas barrier properties after a retort treatment is suppressed while polypropylene is used as a main constituent.

<Lid Member>

The laminate described above can also be used as a lid member for a cup container and a tray container.

From the viewpoint of easy openability, it is preferable to use a polypropylene-based resin having easy peelability for the sealant layer. The easy peelability is developed by blending a polypropylene-based resin and an incompatible resin. Examples of such a resin include high-density polyethylene, medium-density polyethylene, low-density polyethylene, an ethylene-$\alpha$ olefin copolymer, an ethylene-$\alpha,\beta$ unsaturated carboxylic acid, an ionically crosslinked product of an ethylene-$\alpha,\beta$ unsaturated carboxylic acid, various esterified products of an ethylene-$\alpha,\beta$ unsaturated carboxylic acid, a polystyrene resin, a polyester resin, and a polyamide resin. In consideration of the stability of the peeling behavior, it is preferable to blend a polystyrene resin. In order to increase the mono-material ratio, it is preferable to form the sealant layer in multiple layers and to form some of the layers as a blend layer.

Examples of the cup container and the tray container include those obtained by vacuum molding from a co-extruded sheet composed of polypropylene/maleic acid-modified polypropylene/ethylene-vinyl alcohol copolymer (EVOH) resin/maleic acid-modified polypropylene/polypropylene. In this case, the barrier properties of the entire container can be further enhanced. When the EVOH resin layer is designed to be less than 10 wt%, monomaterialization can be achieved by combining the lid member and the cup or tray.

**Examples**

The present disclosure will be described in more detail with reference to the following Examples, but the present disclosure is not limited to these examples.

<Production of Laminate>

(Preparation of Composition for Forming Adhesion Layer)

In ethyl acetate as a dilution solvent, $\gamma$-isocyanate propyltrimethoxysilane and acrylic polyol were added, mixed, and stirred. As the acrylic polyol, GS-5756 manufactured by Mitsubishi Rayon Co., Ltd. was used. To 100 parts by mass of acrylic polyol, 60 parts by mass of $\gamma$-isocyanate propyltrimethoxysilane was added.

Then, tolylene diisocyanate (TDI) as an isocyanate compound was added so that the amount of NCO groups was equivalent to that of OH groups of the acrylic polyol. The obtained mixed solution was diluted with the dilution solvent to obtain an anchor coat liquid having a solid content concentration of 2 mass% as a composition for forming an adhesion layer.

(Preparation of Composition for Forming Gas Barrier Coating Layer)

A composition for forming a gas barrier coating layer was prepared by mixing the following solution A, solution B, and solution C at a mass ratio of 0.5/0.4/0.1.

Solution A: 5 mass% aqueous solution of polyvinyl alcohol (trade name: "Kuraray Poval 60-98", manufactured by Kuraray Co., Ltd.)

Solution B: Hydrolysis solution of a solid content of 5 mass% (in terms of $SiO_2$) obtained by mixing tetraethoxysilane ($Si(OC_2H_5)_4$, trade name: "KBE04", solid content: 100 mass%, manufactured by Shin-Etsu Chemical Co., Ltd., hereinafter, also referred to as "TEOS"), methanol (manufactured by Kanto Chemical Co., Inc.), and 0.1 N hydrochloric acid at a mass ratio of 17/10/73

Solution C: Hydrolysis solution obtained by diluting 1,3,5-tris(3-trialkoxysilylpropyl)isocyanurate as a silane coupling agent to 5 mass% of solid content with mixed solution of water/isopropyl alcohol (mass ratio of water : isopropyl alcohol is 1 : 1)

(Example 1)

The composition for forming an adhesion layer was applied to a corona-treated surface of a biaxially stretched polypropylene film (manufactured by A. J. Plast CO., LTD., trade name: VPH2011, thickness: 20 $\mu$m, heat shrinkage rate in the MD direction: 5.44%, heat shrinkage rate in the TD direction: 6.50%) by a gravure roll coating method, and dried and cured in an oven at 75°C for 10 seconds to form an adhesion layer made of an acrylic polyurethane resin (composite elastic modulus: 5.8 GPa), having an amount of application of 0.1 g/m$^2$ and a thickness of 0.2 $\mu$m.

Next, a transparent inorganic oxide layer (alumina vapor deposition layer) made of alumina, having a thickness of 20 nm was formed by a vacuum vapor deposition device using an electron beam heating method. As the alumina vapor deposition layer, a vapor deposition layer having an O/Al ratio of 1.8 was formed by adjusting vapor deposition material species. The O/Al ratio was measured using an X-ray photoelectron spectroscopy analyzer (manufactured by JEOL Ltd., product name: JPS-90MXV) and non-monochromatic MgK$\alpha$ (1253.6 eV) as an X-ray source, with an X-ray output of 100 W (10 kV-10 mA). Quantitative analysis for determining the O/Al ratio was performed using relative sensitivity factors of 2.28 for O1s and 0.6 for Al2p, respectively.

Next, the composition for forming a gas barrier coating layer was applied onto the inorganic oxide layer by a gravure roll coating method, and heated and dried in an oven under the conditions of a tension of 20 N/m, a drying temperature of 100°C, a time of 10 seconds to form a gas barrier coating layer having a thickness of 0.3 $\mu$m.

Thereby, a gas barrier film having a laminated structure of base material layer/adhesion layer/inorganic oxide layer/gas barrier coating layer was obtained.

Next, a non-stretched polypropylene film (manufactured by TORAY ADVANCED FILM CO., LTD., trade name: ZK207, thickness: 60 $\mu$m, heat shrinkage rate in the MD direction: 0.96%, heat shrinkage rate in the TD direction: 0.44%) was laminated on the gas barrier coating layer of the gas barrier film with a two-component adhesive (manufactured by Mitsui Chemicals, Inc., trade name: main component A525/curing agent A52) interposed therebetween by a dry lamination method. The adhesive was dried under the conditions of 60°C for 10 seconds.

As a result, a laminate having a laminated structure of base material layer/adhesion layer/inorganic oxide layer/gas barrier coating layer/adhesive layer/sealant layer was produced. The content of polypropylene in the obtained laminate was 90 mass% or more, and the ratio of the thickness of the base material layer, the gas barrier layer, and the sealant layer based on the thickness of the laminate was 95% or more.

(Examples 2 and 3)

A laminate was produced in the same manner as in Example 1 except that the temperature of the oven at the time of forming an adhesion layer was 110°C or 125°C.

(Example 4)

A stretched polypropylene film (manufactured by Mitsui Chemicals Tohcello, Inc., trade name: ME-1, thickness: 20 $\mu$m, heat shrinkage rate in the MD direction: 5.20%, heat shrinkage rate in the TD direction: 5.99%) was further laminated on the base material layer of the laminate obtained in Example 1 with a two-component adhesive (manufactured by Mitsui Chemicals, Inc., trade name: main component A525/curing agent A52) interposed therebetween by a dry lamination method. The adhesive was dried under the conditions of 60°C for 10 seconds.

As a result, a laminate having a laminated structure of base material protective layer/adhesive layer/base material layer/adhesion layer/inorganic oxide layer/gas barrier coating layer/adhesive layer/sealant layer was produced. The content of polypropylene in the obtained laminate was 90 mass% or more, and the ratio of the thickness of the base material layer, the gas barrier layer, and the sealant layer based on the thickness of the laminate was 95% or more.

(Example 5)

A laminate was produced in the same manner as in Example 4 except that the temperature of the oven at the time of forming an adhesion layer was 125°C.

(Example 6)

A laminate was produced in the same manner as in Example 5 except that a transparent inorganic oxide layer (silica vapor deposition layer) made of silica, having a thickness of 20 nm was formed instead of the alumina vapor deposition layer.

As the silica vapor deposition layer, a vapor deposition layer having an O/Si ratio of 1.8 was formed by adjusting vapor deposition material species. The O/Si ratio was measured using an X-ray photoelectron spectroscopy analyzer (product name: JPS-90MXV, manufactured by JEOL Ltd.) and non-monochromatic MgK$\alpha$ (1253.6 eV) as an X-ray source, with an X-ray output of 100 W (10 kV-10 mA). Quantitative analysis for determining the O/Si ratio was performed using relative sensitivity factors of 2.28 for O1s and 0.9 for Si2p, respectively.

(Example 7)

A laminate was produced in the same manner as in Example 1 except that an adhesion layer was not formed on a biaxially stretched polypropylene film (manufactured by A. J. Plast CO., LTD., trade name: VPH2011, thickness: 20 $\mu$m), and this film was preheated (annealed) in an oven at 75°C for 10 seconds.

(Example 8)

A laminate was produced in the same manner as in Example 7 except that the temperature of the oven at the time of preheating was 125°C.

(Example 9)

A laminate was produced in the same manner as in Example 1 except that a composition in which the mass ratio of Solution A, Solution B, and Solution C of the composition for forming a gas barrier coating layer was changed to 0.3/0.6/0.1 was used as a composition for forming an adhesion layer.

(Example 10)

A laminate was produced in the same manner as in Example 9 except that the temperature of the oven at the time of forming an adhesion layer was 125°C.

(Comparative Example 1)

A laminate was produced in the same manner as in Example 1 except that the temperature of the oven at the time of forming an adhesion layer was 60°C.

(Comparative Example 2)

A laminate was produced in the same manner as in Example 4 except that the temperature of the oven at the time of forming an adhesion layer was 60°C.

(Comparative Example 3)

A laminate was produced in the same manner as in Example 7 except that the temperature of the oven at the time of preheating was 60°C.

(Comparative Example 4)

A laminate was produced in the same manner as in Example 9 except that the temperature of the oven at the time of forming an adhesion layer was 60°C.

<Measurement of Heat Shrinkage Rate>

The heat shrinkage rate of the laminate of each example was measured according to the following procedures. The results are shown in Table 1.

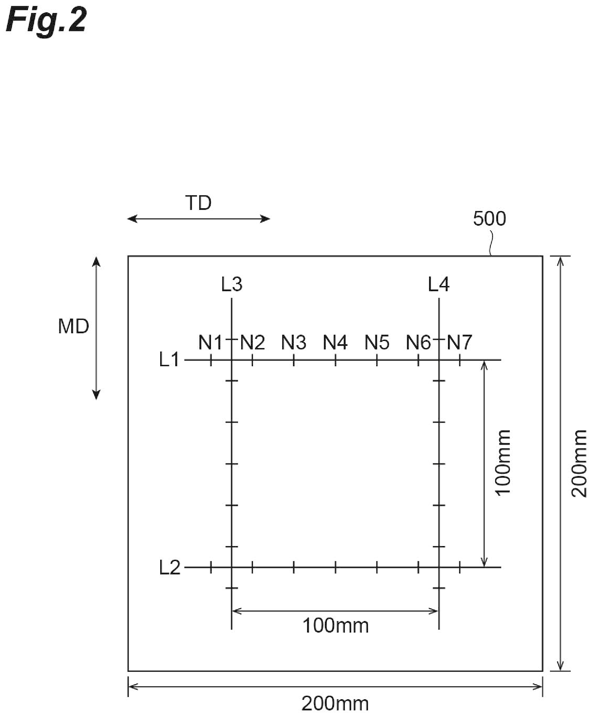

(a) As illustrated in FIG. 2, the laminate was cut into 200 mm × 200 mm to obtain a measurement sample 500.
(b) As illustrated in FIG. 2, two straight lines L1 and L2 having a length of 120 mm or more parallel to the TD direction of the measurement sample 500 were drawn at an interval of 100 mm. Note that the drawing of a straight line or the like was performed on the base material layer or the surface on the base material protective layer side in all procedures.
(c) As illustrated in FIG. 2, two straight lines L3 and L4 having a length of 120 mm or more parallel to the MD direction of the measurement sample 500 were drawn at an interval of 100 mm.
(d) As illustrated in FIG. 2, scale marks N1 to N7 were drawn at seven points on the straight line L1 at intervals of 20 mm. Scale marks were drawn similarly on the straight lines L2 to L4. In this case, when the scale marks N1 to N7 on the straight line L1 were connected to the scale marks N1 to N7 on the straight line L2 with a straight line, the positions of the scale marks on the straight lines L1 and L2 were aligned so that the straight line was parallel to the MD direction. Furthermore, when the scale marks N1 to N7 on the straight line L3 were connected to the scale marks N1 to N7 on the straight line L4 with a straight line, the positions of the scale marks on the straight lines L3 and L4 were aligned so that the straight line was parallel to the TD direction.
(e) The measurement sample 500 placed on a Teflon (registered trademark) sheet was placed on a glass plate in an oven heated to 150°C, and was heated for 15 minutes. After heating, the measurement sample 500 was removed from the oven and left at room temperature (25°C) for 30 minutes.
(f) The linear distance between the scale mark N1 on the straight line L1 (intersection of L1 and N1) and the scale mark N1 on the straight line L2 (intersection of L2 and N1) was measured as the length in the MD direction before and after heating, and the heat shrinkage rate in the MD direction was determined by the following Equation (1). Similarly, the heat shrinkage rate in the MD direction was determined at each position of the scale marks N1 to N7, and the average value thereof was regarded as the heat shrinkage rate in the MD direction of the measurement sample 500.

Heat shrinkage rate (%) in MD direction = (Length in MD direction before heating - Length in MD direction after heating)/Length in MD direction before heating $\times$ 100...(1)  (1)

(g) The linear distance between the scale mark N1 on the straight line L3 (intersection of L3 and N1) and the scale mark N1 on the straight line L4 (intersection of L4 and N1) was measured as the length in the TD direction before and after heating, and the heat shrinkage rate in the TD direction was determined by the following Equation (2). Similarly, the heat shrinkage rate in the TD direction was determined at each position of the scale marks N1 to N7, and the average value thereof was regarded as the heat shrinkage rate in the TD direction of the measurement sample 500.

Heat shrinkage rate (%) in TD direction = (Length in TD direction before heating - Length in TD direction after heating)/Length in TD direction before heating $\times$ 100...(2)  (2)

Note that the heat shrinkage rate of each layer of the base material protective layer, the base material layer, and the sealant layer was also measured according to the procedure described above.

<Sectional Composite Elastic Modulus Measurement of Adhesion Layer>

The sectional composite elastic modulus of the adhesion layer was measured with a scanning probe microscope (SPM) by the following method.

-Production of Cross-Sectional Sample-

The front surface and the back surface of the laminate were subjected to a corona treatment. Subsequently, the laminate was cut with a razor so as to have a strip shape of 2 mm $\times$ 3 mm, and the cut film piece was embedded in a resin. As the resin, a visible light curable resin ("ARONIX LCR D-800", manufactured by TOAGOSEI CO., LTD.) was used. The film piece was embedded in a resin, and then the resin was cured by light irradiation. After the resin was cured, the film piece embedded in the resin was fixed with an insert for an SPM sample holder. Subsequently, trimming and cross-sectional cutting of the fixed film piece at room temperature (25°C) were performed with a glass knife. Then, the cross-sectional cutting was performed with a diamond knife with settings of a cutting speed of 3 mm/s and a cutting film thickness of 500 nm until a mirror surface was obtained. As a cross-sectional cutting device, an ultramicrotome (EM UC7 manufactured by Leica Microsystems) was used. Furthermore, the cutting direction was a direction horizontal to the interface of each layer included in the film piece. The elastic modulus measurement of the sample (cross-sectional sample) whose cross section was exposed was performed in a state of being fixed with an insert for an SPM sample holder.

-Measurement of Composite Elastic Modulus-

The cross-sectional sample was subjected to shape measurement and elastic modulus measurement by an SPM (scanning probe microscope). Note that, as the SPM, "Jupiter XR (trade name)" manufactured by Oxford Instruments was used. Furthermore, as a cantilever (measurement probe) of SPM, "biosphere B30-FM (trade name)" manufactured by nanotools GmbH (tip radius: 30 nm, spring constant: 2.8 N/m) was used. In the measurement of the cross-sectional sample and the calculation of the elastic modulus of the adhesion layer, the individual characteristic value of the product was referred to for the tip radius of the cantilever, and the values acquired by the GetReal method, which is a calibration function of the SPM, were used for the spring constant and the optical lever sensitivity of the cantilever.

First, under the conditions of a visual field range of 1 $\mu$m $\times$ 1 $\mu$m and a scanning speed of 2 Hz by an AC mode (tapping mode) of the SPM, shape measurement was performed by scanning perpendicularly to the layer interface of the cross-sectional sample. Here, the center of the field of view was set to be the center of the film thickness of the cross section of the adhesion layer. Next, in the contact mode of the SPM, the cantilever was pushed into the adhesion layer under the conditions of a maximum load of 10 nN and a test speed of 500 nm/s, and a force curve (load displacement curve) when the cantilever was pushed in and pulled out was acquired. A total of 100 force curves of 10 points in length $\times$ 10 points in width were acquired at intervals of 100 nm in the visual field range. A force curve with a displacement of 500 nm or more was obtained for each of the pushing and pulling of the cantilever. For the cross-sectional sample, this operation was performed at two places for each sample level, and a total of 200 force curves were acquired. Note that the elastic modulus of the cantilever was assumed to be 865 GPa, the Poisson's ratio was assumed to be 0.2, and the Poisson's ratio of the adhesion layer was assumed to be 0.33.

The obtained force curve was analyzed using an elastic contact model of JKR (Johnson-Kendall-Roberts) theory to calculate the elastic modulus of the adhesion layer. The elastic modulus according to the JKR theory was calculated by fitting analysis using the elastic modulus, displacement origin, and maximum cohesive force of the sample as fitting parameters using SPM analysis software. The analysis range for each point of the force curve was a range starting from the load and displacement when the load first reached "(maximum load - minimum load) $\times$ 0.65 + minimum load" and ending with the load and displacement when the load reached the minimum load among the load changes at the time of pulling after reaching the maximum load.

According to the above procedure, the average value of the elastic moduli at 200 points of the force curve acquired for each Example was calculated.

<Evaluation of Gas Barrier Properties (Oxygen Barrier Properties) of Laminate>

-Before Retorting-

The gas barrier properties of the laminate obtained in each example were measured under the conditions of 30°C and 70% RH by the MOCON method. When N = 20, the average value was taken as the gas barrier value (oxygen permeability: cc·m$^2$/day/atm) of the laminate. The results are shown in Table 1.

-After Retorting-

The sealant surfaces of the laminate obtained in each example were opposed to each other and heat-sealed to produce a flat pouch having a size of 150 mm $\times$ 150 mm. 100 ml of water was sealed in the flat pouch, and the flat pouch was subjected to a retort treatment under the condition of hot water storage at 121°C for 30 minutes, then the water in the pouch was discarded, and the flat pouch was naturally dried for 12 hours or more. The gas barrier properties of the laminate cut out from the flat pouch after drying were measured under the conditions of 30°C and 70% RH by the MOCON method. When N = 20, the average value was taken as the gas barrier value (oxygen permeability) of the laminate. The results are shown in Table 1 (standard deviation of barrier value of N = 20 is also shown).

<Calculation of Barrier Property Deterioration Rate>

Based on the above results, to what extent the barrier properties deteriorated before and after retorting was calculated. The results are shown in Table 1.

Barrier property deterioration rate (%) = Gas barrier value after retorting $\div$ Gas barrier value before retorting $\times$ 100

<Evaluation of Lamination Strength of Laminate>

The lamination strength between the gas barrier film and the sealant layer was measured using a flat pouch obtained in the same manner as in the gas barrier property evaluation, subjected to a retort treatment, and then dried. The measurement was performed in accordance with JIS K6854, with a test width of 15 mm, a peeling rate of 300 mm/min, and a T-peel configuration (the measured value was in the unit of [N/15 mm]). A strength of lamination of 2.0 [N/15 mm] or more was evaluated as O, and a strength of lamination of less than 2.0 [N/15 mm] was evaluated as $\times$. The results are shown in Table 1.

[Table 1]

| | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 |
|---|---|---|---|---|---|---|---|---|---|---|---|---|---|---|---|
| Base protective layer | | Absent | Absent | Absent | Present | Present | Present | Absent | Absent | Absent | Absent | Absent | Present | Absent | Absent |
| Preheating temperature (°C) | | - | - | - | - | - | - | 75 | 125 | - | - | - | - | 60 | - |
| Drying temperature (°C) of adhesion layer | | 75 | 110 | 125 | 75 | 125 | 125 | - | - | 75 | 125 | 60 | 60 | - | 60 |
| Composite elastic modulus (GPa) of adhesion layer | | 5.8 | 6.2 | 6.5 | 5.8 | 6.5 | 6.5 | - | - | 4.7 | 6.4 | 3.1 | 3.1 | - | 3.1 |
| Heat shrinkage rate (%) of laminate | MD | 2.52 | 2.42 | 2.26 | 3.53 | 3.53 | 3.51 | 2.62 | 2.35 | 3.12 | 2.78 | 5.1 | 5.1 | 5.3 | 5.2 |
| | TD | 6.06 | 5.21 | 4.56 | 6.39 | 6.23 | 6.11 | 5.91 | 4.89 | 5.98 | 4.67 | 6.5 | 6.5 | 6.3 | 6.1 |
| Gas barrier value (cc·m2/day/atm) | Before retorting | 0.5 | 0.4 | 0.3 | 0.5 | 0.3 | 0.2 | 1 | 0.9 | 0.5 | 0.4 | 0.7 | 0.7 | 2.4 | 0.9 |
| | After retorting | 2.1 | 1.5 | 1.0 | 1.9 | 0.9 | 0.8 | 3.4 | 3.1 | 1.9 | 1.6 | 4.8 | 4.9 | 21.1 | 8.9 |
| | Standard deviation | 0.4 | 0.25 | 0.11 | 0.45 | 0.09 | 0.09 | 0.47 | 0.41 | 0.66 | 0.57 | 0.72 | 0.81 | 4.3 | 1.7 |
| Barrier property deterioration rate | | 420% | 375% | 333% | 380% | 300% | 400% | 340% | 344% | 380% | 400% | 686% | 700% | 879% | 989% |
| Lamination Strength | | ○ | O | ○ | ○ | ○ | ○ | × | × | ○ | ○ | ○ | O | × | × |

EP 4 768 243 A1

**Industrial Applicability**

The laminate for packaging according to the present disclosure can suppress deterioration of the gas barrier properties after a retort treatment while polypropylene is used as a main constituent. Such a laminate for packaging can be said to be a (mono-material) packaging material made of a single material, and excellent recyclability is expected.

Reference Signs List

11      base material layer
12      gas barrier layer
12a     adhesion layer
12b     inorganic oxide layer
12c     gas barrier coating layer
13      sealant layer
100     laminate

**Claims**

1.  A laminate for packaging, the laminate comprising a base material layer, a gas barrier layer including an inorganic oxide layer, and a sealant layer in this order, wherein

    the base material layer is a biaxially stretched polypropylene-based resin film,
    the sealant layer is a polypropylene-based resin film,
    a polypropylene-based resin is contained in an amount of 90 mass% or more based on a total amount of the laminate, and
    a heat shrinkage rate in an MD direction and a heat shrinkage rate in a TD direction of the laminate after being heated in an oven at 150°C for 15 minutes, as determined by the following Equations (1) and (2), are less than 5.0% and less than 10%, respectively:

    Heat shrinkage rate (%) in MD direction = (Length in MD direction before heating - Length in MD direction after heating)/Length in MD direction before heating $\times$ 100...(1)     (1)

    Heat shrinkage rate (%) in TD direction = (Length in TD direction before heating - Length in TD direction after heating)/Length in TD direction before heating $\times$ 100...(2).     (2)

2.  The laminate for packaging according to claim 1, wherein the gas barrier layer includes an adhesion layer containing a urethane-based resin or a polyvinyl alcohol-based resin, and the inorganic oxide layer on the adhesion layer from the base material layer side.

3.  The laminate for packaging according to claim 2, wherein the adhesion layer is formed by drying a composition for forming an adhesion layer applied onto the base material layer at higher than 60°C to 130°C for 1 second to 2 minutes.

4.  The laminate for packaging according to claim 2, wherein a sectional composite elastic modulus of the adhesion layer is 3.5 to 6.5 GPa.

5.  The laminate for packaging according to claim 1, wherein a heat shrinkage rate in the MD direction and a heat shrinkage rate in the TD direction of the base material layer after being heated in an oven at 150°C for 15 minutes, as determined by the above Equations (1) and (2), are 3.0% or more and less than 7.0% and 3.0% or more and less than 10%, respectively.

6.  The laminate for packaging according to claim 1, further comprising a base material protective layer on the base material layer, wherein
    a heat shrinkage rate in the MD direction and a heat shrinkage rate in the TD direction of the base material protective layer after being heated in an oven at 150°C for 15 minutes, as determined by the above Equations (1) and (2), are less than 7.0% and less than 10%, respectively.

7. The laminate for packaging according to claim 1, wherein a heat shrinkage rate in the MD direction and a heat shrinkage rate in the TD direction of the sealant layer after being heated in an oven at 150°C for 15 minutes, as determined by the above Equations (1) and (2), are less than 2.0% and less than 2.0%, respectively.

8. The laminate for packaging according to claim 1, wherein the inorganic oxide layer contains aluminum oxide or silicon oxide.

9. The laminate for packaging according to claim 2, wherein the gas barrier layer further includes a gas barrier coating layer on the inorganic oxide layer, and
the gas barrier coating layer is formed using a composition for forming a gas barrier coating layer containing at least one selected from the group consisting of a hydroxyl group-containing polymer compound, a metal alkoxide, a silane coupling agent, and a hydrolysate thereof.

10. The laminate for packaging according to claim 1, wherein a thickness of the base material layer is 12 to 38 $\mu$m.

11. The laminate for packaging according to claim 6, wherein a ratio of a thickness of the base material protective layer to a thickness of the base material layer (the thickness of the base material protective layer/the thickness of the base material layer) is 0.5 to 2.0.

12. The laminate for packaging according to claim 1, which is used in a retort pouch.

13. A packaging bag obtained by forming the laminate for packaging according to any one of claims 1 to 12 into a bag.

**Fig.1**

# Fig.2

## INTERNATIONAL SEARCH REPORT

| International application No. |
|---|
| **PCT/JP2024/041796** |

| A. | CLASSIFICATION OF SUBJECT MATTER |
|---|---|

*B32B 27/32*(2006.01)i; *B32B 9/00*(2006.01)i; *B65D 65/40*(2006.01)i
FI:  B32B27/32 Z; B32B9/00 A; B65D65/40 D

According to International Patent Classification (IPC) or to both national classification and IPC

| B. | FIELDS SEARCHED |
|---|---|

Minimum documentation searched (classification system followed by classification symbols)

B32B27/32; B32B9/00; B65D65/40

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2022-185386 A (TOPPAN PRINTING CO., LTD.) 14 December 2022 (2022-12-14) claims, paragraphs [0029]-[0031], [0039], [0040], [0049], [0073], [0119], fig. 2 | 1-13 |
| X | JP 2021-020391 A (TOPPAN PRINTING CO., LTD.) 18 February 2021 (2021-02-18) claims, paragraphs [0027], [0076]-[0092], examples | 1-13 |
| A | WO 2021/176824 A1 (TOPPAN PRINTING CO., LTD.) 10 September 2021 (2021-09-10) claims, examples | 1-13 |
| P, X | WO 2023/238825 A1 (TOPPAN HOLDINGS INC.) 14 December 2023 (2023-12-14) claims, examples | 1-13 |
| P, A | WO 2024/225339 A1 (TOYOBO CO., LTD.) 31 October 2024 (2024-10-31) claims, examples | 1-13 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 February 2025** | **04 March 2025** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/041796**

| Patent document cited in search report | | | Publication date (day/month/year) | Patent family member(s) | | | Publication date (day/month/year) |
|---|---|---|---|---|---|---|---|
| JP | 2022-185386 | A | 14 December 2022 | (Family: none) | | | |
| JP | 2021-020391 | A | 18 February 2021 | US | 2022/0153006 | A1 | |
| | | | | claims, paragraphs [0037], [0103]-[0157], examples | | | |
| | | | | JP | 2022-113738 | A | |
| | | | | JP | 2023-63305 | A | |
| | | | | JP | 2024-86792 | A | |
| | | | | WO | 2021/020400 | A1 | |
| | | | | EP | 4005791 | A1 | |
| | | | | EP | 4234242 | A2 | |
| | | | | CN | 114126974 | A | |
| WO | 2021/176824 | A1 | 10 September 2021 | US | 2022/0411598 | A1 | |
| | | | | claims, examples | | | |
| | | | | JP | 2021-138057 | A | |
| | | | | EP | 4105016 | A1 | |
| | | | | CN | 115190840 | A | |
| WO | 2023/238825 | A1 | 14 December 2023 | JP | 2024-97338 | A | |
| WO | 2024/225339 | A1 | 31 October 2024 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017178357 A

**Non-patent literature cited in the description**

- *JIS K 6726*, 1994

- Retort pouch food. Standards for Foods and Additives. Ministry of Health and Welfare Notification, 1959